# EUROPÄISCHE PATENTSCHRIFT

(11) **EP 1 313 947 B1**
(45) Veröffentlichungstag und Bekanntmachung des Hinweises auf die Patenterteilung: **26.04.2006**
(21) Anmeldenummer: 01949269.3
(22) Anmeldetag: 20.06.2001
(51) Int. Cl.: F02P 5/15

(54) **VERFAHREN ZUM BETREIBEN EINER BRENNKRAFTMASCHINE UND ENTSPRECHENDE VORRICHTUNG**
METHOD FOR OPERATING AN INTERNAL COMBUSTION ENGINE AND CORRESPONDING ARRANGEMENT
PROCEDE DE FONCTIONNEMENT D'UN MOTEUR A COMBUSTION INTERNE ET DISPOSITIF CORRESPONDANT

(30) Priorität: 23.08.2000 DE 10041443
(43) Veröffentlichungstag der Anmeldung: 28.05.2003
(73) Patentinhaber: ROBERT BOSCH GMBH, 70442 Stuttgart (DE)
(72) Erfinder: KONRAD, Johann, 71732 Tamm (DE); HAUSSMANN, Martin, 74343 Sachsenheim (DE); FRIEDMANN, Harry, 71272 Renningen (DE)
(86) Internationale Anmeldenummer: PCT/DE2001/002284
(87) Internationale Veröffentlichungsnummer: WO 2002/016764

(56) Entgegenhaltungen:
- DE-A- 2 940 086
- DE-A- 3 938 257
- DE-A- 19 721 070
- DE-U- 29 514 125

## Beschreibung

### Stand der Technik

Die vorliegende Erfindung betrifft ein Verfahren zum Betreiben einer Brennkraftmaschine sowie eine entsprechende Vorrichtung. Aus der DE-Patentanmeldung 199 12 770.0 ist bereits ein Verfahren sowie eine entsprechende Vorrichtung zum Betreiben einer Brennkraftmschine bekannt, wobei der. Sollwert der Schließzeit eines steuerbaren Schalters einer Zündeinrichtung als Anzahl von Taktimpulsen eines Taktgebers ausgedrückt wird, wobei die Taktimpulse unabhängig von der Bewegung der Kurbelwelle erzeugt werden. Nach Erreichen der berechneten Anzahl von Taktimpulsen wird die Zündung ausgelöst.

Desweiteren ist aus der DE-Patentanmeldung 199 06 390.7 ein Verfahren und eine entsprechende Vorrichtung zum Betreiben einer Brennkraftmaschine bekannt, wobei zwischen zwei Ausgabemodi unterschieden wird. Zum einen wird im Zündwinkel-Ausgabemodus der Zündzeitpunkt derart ausgegeben, dass der berechnete Zündwinkel eingehalten wird. Zum anderen wird im Ladezeit-Ausgabemodus eine Zündung dann ausgelöst, wenn eine bestimmte Ladezeit der Zündspule verstrichen ist.

### Vorteile der Erfindung

Das erfindungsgemäße Verfahren und die entsprechende erfindungsgemäße Vorrichtung mit den Merkmalen der unabhängigen Ansprüche haben demgegenüber den Vorteil, dass auch nach der Berechnung der Sollwerte die Dynamik der Brennkraftmaschine berücksichtigt wird. Dadurch ist es möglich, die Brennkraftmaschine näher am Zeitgeschehen zu betreiben und somit durch die Dynamik entstehende Fehler zu vermeiden. Desweiteren wird immer gewährleistet, dass auch bei Ausfall beispielsweise eines Geberradsensors zumindest die mit den bereits berechneten Sollwerten verbundenen Ereignisse unter allen Umständen ausgegeben werden.

Durch die in den Unteransprüchen aufgeführten Maßnahmen sind vorteilhafte Weiterbildungen und Verbesserungen des in dem unabhängigen Anspruch angegebenen Verfahrens oder der in dem unabhängigen Anspruch angegebenen Vorrichtung möglich. Besonders vorteilhaft ist, den Impulszähler nach jedem Bezugsimpuls zu initialisieren, da so die Anpassung an eine neue Dynamik der Brennkraftmaschine am einfachsten geschehen kann. Desweiteren ist es vorteilhaft, Ereigniszeitpunkte zylinderindividuell zu berechnen, da die Zylinder unterschiedliche Eigenschaften aufweisen können. Eine unabhängige Berechnung von Sollwerten, abhängig von Betriebsparametern und Betriebsarten mittels einer von einer Ausgabeeinheit getrennten Steuereinheit ist vorteilhaft, da so die Rechenkapazität des Steuergeräts sinnvoll genutzt wird. Für eine optimale Gestaltung der Zündungen einer Brennkraftmaschine ist es vorteilhaft, zum einen einen Zeitpunkt, zu dem der steuerbare Schalter geschlossen wird, und einen Zündzeitpunkt bzw. eine Schließzeit-Dauer zu berechnen oder bei einer Pulszugzündung als Anzahl von Funken in einem Funkenband, eine Nachladezeit oder eine Offenzeit als Sollwerte zu verwenden. Um eine zeitlich richtige Zuordnung der Vorgänge in der Brennkraftmaschine zu erreichen, ist es vorteilhaft, die Sollwerte in ihrer zeitlichen Reihenfolge an die Ausgabeeinheit weiterzugeben. Es ist damit möglich, lange Schließzeiten früh zu erkennen und sicher auszugeben. Es ist weiterhin vorteilhaft, die zu steuernden Ereignisse in der Brennkraftmaschine abhängig von Betriebsparametern zu gestalten, da so der Zustand der Brennkraftmaschine möglichst genau abgebildet werden kann. Desweiteren ist auch die Unterscheidung verschiedener Betriebsarten eine Möglichkeit, unterschiedliche Zustände der Brennkraftmaschine möglichst genau darzustellen. Eine weitere Ausgestaltungsform, bei der die Betriebsart über mindestens 2 Segmente konstant gehalten wird, ist vorteilhaft, da so unvorteilhafte Übergänge von einer Betriebsart zur nächsten vermieden werden. Ist die Anzahl der Taktimpulse, die bis zu einem bestimmten Ereignis vergehen sollen sehr klein bzw. negativ, dann reicht die Geschwindigkeit der Steuerung nicht aus, das Ereignis rechtzeitig auszulösen. Demzufolge ist es dann vorteilhaft, dass die berechnete Anzahl der Taktimpulse in diesem Fall nicht verändert wird. Um die Dynamik der Brennkraftmaschine lange im voraus beobachten zu können bzw. lange Schließzeiten gewährleisten zu können, ist es erforderlich, dass die Ereigniszeitpunkte für eine bestimmte Anzahl von Zylindern zylinderindividuell berechnet wird.

Eine weitere vorteilhafte Weiterbildung der Erfindung sieht vor, dass in der Ausgabeeinheit Speichereinheiten vorgesehen sind, deren Inhalt abhängig von dem Auslösen der Ereignisse ist. Insbesondere vorteilhaft ist es, einen Erfolgsbit-Speicherplatz vorzusehen, der dann einen ersten Wert besitzt wenn ein Ereignis beendet wurde und dann einen zweiten Wert besitzt, wenn das Ereignis in einem neuen Zyklus erneut berechnet wurde. Dadurch ist es möglich, den erfolgreichen Abschluß des Vorgangs der Brennkraftmaschine zu überwachen und Fehlauslösungen zu unterbinden, solange noch kein neuer Wert für einen neuen Zyklus berechnet wurde. Desweiteren kann auch überwacht werden, dass eine Berechnung eines neuen Sollwerts nicht erfolgt, solange das Ereignis nicht ausgelöst wurde. Ebenso vorteilhaft ist die Einführung eines Aktivitätsbit-Speicherplatzes, der einen ersten Wert besitzt, wenn der Beginn eines Ereignisses ausgelöst wurde und einen zweiten Wert besitzt, wenn das Ende des Ereignisses erreicht wurde. Anhand dieses Aktivitätsbits ist es möglich zu überwachen, dass während des Verlaufs des Ereignisses keine neuen Sollwerte geladen und berechnet werden. Für bestimmte Vorgänge in der Brennkraftmaschine ist es weiterhin von Vorteil, anhand des Aktivitätsbits festzustellen, wie lange ein Ereignis dauert und/oder wie viele Zylinder gleichzeitig dieses Ereignis durchführen. Vorteilhaft dabei ist, dass bei überlanger Dauer eines Ereignisses, beispielsweise bei überlanger Dauer eines Ladens einer Zündspule, eine Störung erkannt wird und dieses Ereignis ausgelöst wird, d.h. das Laden der Zündspule beendet wird.

### Zeichnung

Ausführungsbeispiele der Erfindung sind in Zeichnungen dargestellt und in der nachfolgenden Beschreibung näher erläutert. Es zeigen
Figur 1 eine erfindungsgemäße Vorrichtung zum Betreiben einer Brennkraftmaschine und
Figur 2 eine schematische Darstellung der zeitlichen Abfolge der in der Brennkraftmaschine vorhandenen Bezugsimpulse, Signale und Werte, die in der Speichereinheit der Ausgabeeinheit der erfindungsgemäßen Vorrichtung zum Betreiben der Brennkraftmaschine vorliegen.

### Beschreibung der Ausführungsbeispiele

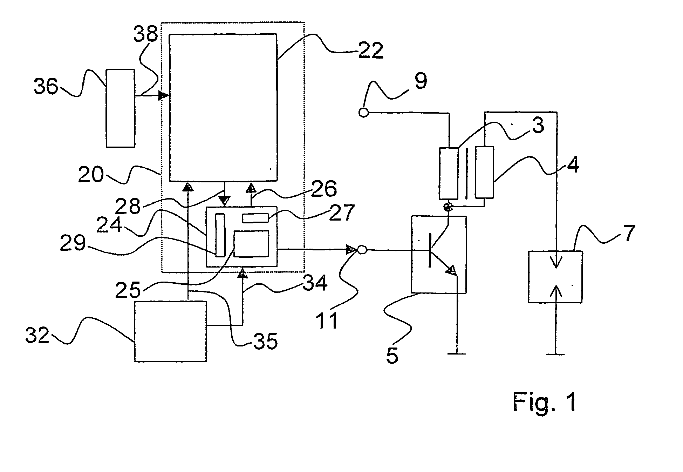

In Figur 1 ist schematisch eine erfindungsgemäße Vorrichtung zum Steuern einer Brennkraftmaschine, insbesondere zum Zünden einer Brennkraftmaschine dargestellt. Die Vorrichtung in Figur 1 weist eine Zündspule auf, die eine Primärspule 3 und eine Sekundärspule 4 beinhaltet. Die Primärspule 3 ist an ihrem einen Ende mit einem Batteriespannungs-Anschluß 9 verbunden. Das andere Ende der Primärspule 3 ist mit einer Zündendstufe 5 verbunden, die einen steuerbaren Schalter, vorzugsweise einen Transistor, enthält. Das andere Ende der Primärspule 3 ist weiterhin mit dem einen Ende der Sekundärspule 4 verbunden. Das andere Ende der Sekundärspule 4 ist mit einer ersten Elektrode einer Zündkerze 7 verbunden. Die zweite Elektrode der Zündkerze 7 ist mit Masse verbunden. Die Zündendstufe 5 ist außerdem mit Masse verbunden. Die Zündendstufe 5 weist einen steuerbaren Eingang 11 auf, der mit dem Steuergerät 20 verbunden ist, wobei das Steuergerät 20 zu dem steuerbaren Eingang 11 Signale aussendet, die zum Auslösen der Zündung führen. Beispielsweise wird bei Aussenden eines ersten Signals vom Steuergerät 20 zum steuerbaren Eingang 11 der Zündendstufe 5 der steuerbare Schalter geschlossen und es fließt ein Strom durch die Primärspule 3. Sendet das Steuergerät 20 ein zweites Signal aus, dann wird der steuerbare Schalter wieder geöffnet und der Stromfluß durch die Primärspule 3 wird unterbrochen. Dies führt dazu, dass in der Sekundärspule 4 eine Spannung induziert wird, die einen Zündfunken in der Zündkerze 7 erzeugt.

Das Steuergerät 20 weist in einem bevorzugten Ausführungsbeispiel eine Steuereinheit 22 und eine Ausgabeeinheit 24 auf, die über die Verbindungen 26 und 28 Daten austauschen. Die Ausgabeeinheit 24 ist direkt mit dem Eingang 11 des steuerbaren Schalters 5 verbunden. Über diese Verbindung können Signale von der Ausgabeeinheit 24 an die Endstufe 5 weitergeleitet werden. Die Brennkraftmaschine weist weiterhin vorzugsweise an ihrer Kurbelwelle ein Zahnrad mit einer definierten Anzahl von Zähnen auf. Ein Geberradsensor 32 detektiert das Auftreten der Lücken zwischen den Zähnen des Geberrads und gibt über die Verbindung 34 zur Ausgabeeinheit 24 ein Signal dann weiter, wenn von dem Geberradsensor 32 eine Zahnlücke detektiert wurde. Analog dazu wird über die Verbindung 35 ebenfalls ein Impuls an die Steuereinheit 22 weitergegeben, wenn eine Zahnlücke vom Geberradsensor 32 detektiert wurde. Desweiteren weist die Brennkraftmaschine Sensoren 36 auf, die verschiedene Betriebsparameter der Brennkraftmaschine überwachen. Die Vielzahl der Sensoren sind hier der Einfachheit halber anhand eines Kästchens 36 dargestellt. Betriebsparameter, die mittels der Sensoren 36 überwacht werden, sind beispielsweise die Temperatur der Außenluft, die Kühlwassertemperatur, die Temperatur im Ansaugtrakt, die Stellung der Drosselklappe, das Vorhandensein einer Abgasrückführung, eine Klopfregelung, der Lastzustand und/oder die Drehzahl. Die mittels der Sensoren 36 ermittelten Informationen über die Betriebsparameter werden über die Verbindung 38 an die Steuereinheit 22 weitergegeben.

Die Ausgabeeinheit 24 enthält einen unabhängigen Taktgeber 25, der unabhängig von den Vorgängen in der Brennkraftmaschine, d.h. unabhängig von den in der Brennkraftmaschine ablaufenden Bewegungen, Impulse erzeugt. Desweiteren weist die Ausgabeeinheit 24 einen Impulszähler 27 auf, der Impulse des unabhängigen Taktgebers 25 zählt. Weiterhin enthält die Ausgabeeinheit 24 eine Speichereinheit 29, in der Werte gespeichert werden können. Alle Bestandteile der Ausgabeeinheit stehen miteinander in Verbindung und können Daten austauschen und/oder abrufen.

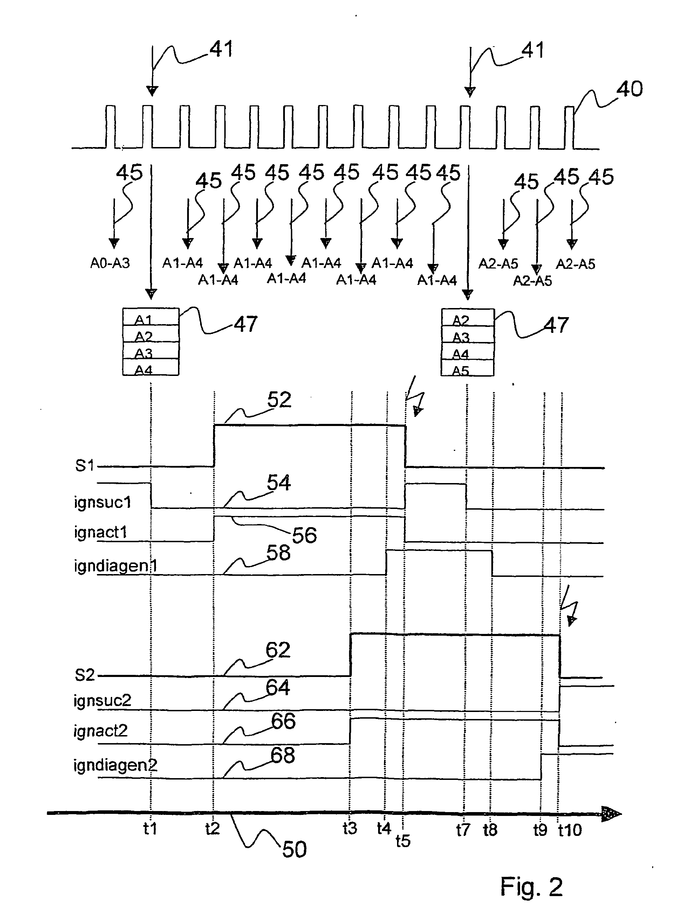

Das erfindungsgemäße Verfahren zum Betreiben einer Brennkraftmaschine wird nun anhand von Figur 2 erläutert. Alle in der Figur 2 über der X-Achse aufgetragenen Signalfolgen sind zeitabhängig, d.h. auf der X-Achse ist die Zeit aufgetragen. Die Impulsfolge 40 ist eine Impulsfolge, wie sie der Geberradsensor 32 über die Verbindungen 34 bzw. 35 an die Ausgabeeinheit 24 bzw. die Steuereinheit 22 weitergibt. Diese Impulsfolge 40 enthält Informationen darüber, welchen Drehwinkel die Kurbelwelle aufweist.

Zu bestimmten, fest vorgegebenen Abständen, beispielsweise bei einem Winkel von 72° Kurbelwinkel vor dem oberen Totpunkt eines jeden Zylinders, wird von der Steuereinheit 22 durch ein Signal 41 zu einem Zeitpunkt t1 oder t7 ausgelöst, dass von der Steuereinheit 22 die Daten der Sensoren 36 abgefragt werden. Entsprechend der Daten der Sensoren berechnet die Steuereinheit 22 zu den Zeitpunkten t1 bzw. t7 Sollwerte für bestimmte Ereignisse, die in der Brennkraftmaschine zukünftig stattfinden sollen. Derartige Sollwerte für das Ereignis Zündung sind beispielsweise der Kurbelwinkel, bei dem der steuerbare Schalter der Endstufe 5 geschlossen wird, der Zündwinkel und die Zeitdauer, in der der steuerbare Schalter der Endstufe 5 geschlossen sein soll (Schließzeit). Wenn die Zündung in Form einer Pulszugzündung verläuft, werden Sollwerte wie die Anzahl der Funken in einem Funkenband, die Nachladewinkel und die Offenzeit berechnet. Des weiteren können auch für das Ereignis Einspritzung Sollwerte wie die Einspritzmenge, der Einspritzwinkel oder die Einspritzdauer berechnet werden. Diese oder auch andere Sollwerte für zukünftige Ereignisse in der Brennkraftmaschine, dabei können auch andere als die bisher genannten Ereignisse berücksichtigt werden, werden von der Steuereinheit 22 in Abhängigkeit von Betriebsarten, die abhängig von den Informationen der Sensoren 36 ausgewählt werden, berechnet. Dabei können Betriebsarten wie Betrieb in der Startphase, Dynamikbetrieb, Normalbetrieb (Teillast), Leerlaufbetrieb und/oder Volllastbetrieb unterschieden werden. Diese Betriebsarten sind allgemein bekannt für das Betreiben von Brennkraftmaschinen und werden deshalb hier nicht näher erläutert.

In einem bevorzugten Ausführungsbeispiel werden diese Sollwerte zylinderindividuell berechnet, wobei vorzugsweise die Sollwerte für mehrere Zylinder gleichzeitig berechnet werden, wobei die Ereignisse in den Zylindern nacheinander ablaufen, beispielsweise erfolgt bei einer 4-Zylinder-Brennkraftmaschine die Zündung zuerst im 1. Zylinder, dann im 2. Zylinder, danach im 3. Zylinder und dann im 4. Zylinder usw. In der entsprechenden zeitlichen Reihenfolge werden diese Sollwerte anschließend über die Verbindung 28 an die Ausgabeeinheit 24 weitergegeben, wobei die Sollwerte zu diesem Zeitpunkt noch nicht einem bestimmten Zylinder zugeordnet sind. In Figur 2 ist die Übergabe der Sollwerte an die Ausgabeeinheit 24 anhand der Tabellen 47 schematisch dargestellt, die die Sollwerte A1, A2, A3 und A4 für ein Ereignis in zeitlicher Reihenfolge enthält, beispielsweise die Zündwinkel-Sollwerte.

Die Ausgabeeinheit 24 führt nun eine Verknüpfung der Sollwerte mit den entsprechenden Zylindern, in denen die mit den Sollwerten verbundenen Ereignisse stattfinden sollen, durch. So ist dann, um auf das oben angeführte Beispiel zurückzukommen, A1 ein Sollwert für die Zündung im Zylinder 1, A2 ein Sollwert für die Zündung im Zylinder 2, A3 ein Sollwert für die Zündung im Zylinder 3 und A4 ein Sollwert für die Zündung im Zylinder 4. Nach der Übergabe der Sollwerte an die Ausgabeeinheit 24 und die Zuordnung zu den Zylindern werden aus den Sollwerten Ereigniszeitpunkte berechnet, die aus den Sollwerten resultieren. Beispielsweise wird aus dem Sollwert für den Zündwinkel des ersten Zylinders ein Zündzeitpunkt, d.h. ein Zeitpunkt, zu dem der steuerbare Schalter der Zündendstufe 5 wieder geöffnet werden soll, ermittelt. Dabei berechnet die Ausgabeeinheit 24 daraus die Anzahl von Impulsen, die vom unabhängigen Taktgeber 25 vom Berechnungszeitpunkt bis zum Ereigniszeitpunkt abgewartet werden müssen. Diese Impulse werden vom Impulszähler 27 gezählt und es wird dann, wenn von einer in der Ausgabeeinheit 24 enthaltenen Vergleichseinheit die Übereinstimmung der Anzahl der vom Impulszähler 27 gezählten Impulse und mit der Anzahl der berechneten Impulse festgestellt wird, ein Signal generiert, das bewirkt, dass von der Ausgabeeinheit 24 beispielsweise an den steuerbaren Eingang 11 der Endstufe 5 ein Signal zum Unterbrechen des Stromflusses durch die Primärspule ausgesendet wird. Eine Folge derartiger Signale S1 und S2 ist in Figur 2 anhand der Kurven 52 und 62 dargestellt. Zum Zeitpunkt t2 wird ein erstes Signal an den steuerbaren Eingang 11 der Zündendstufe 5 ausgesendet, so dass Strom durch die Primärspule 3 fließt und zu einem Zeitpunkt t5 wird ein zweites Signal zum-steuerbaren Eingang 11 der Zündendstufe 5 ausgesendet, so dass der Stromfluß durch die Primärspule 3 unterbrochen wird. Dies initiiert eine Zündung in der Zündkerze 7, was hier durch ein Blitzsymbol angedeutet ist. Bei der Signalfolge S2 der Kurve 62 beginnt zu dem Zeitpunkt t3 der Stromfluß durch die Primärspule 3 und endet zu dem Zeitpunkt t10 der Stromfluß durch die Primärspule 3.

Die Berechnung der Sollwerte wird legiglich zu den Zeitpunkten t1 bzw. t7, d.h. zu bestimmten, fest vorgegebenen Kurbelwellenwinkeln, durchgeführt. Aufgrund der Dynamik der Brennkraftmaschine kann es jedoch zwischen den Sollwertberechnungszeitpunkten zu einer Veränderung der Bewegung der Brennkraftmaschine gegenüber den voraus berechneten Verhältnissen kommen. Dies soll in dem hier dargestellten Verfahren berücksichtigt werden. Dazu wird die Signalfolge 40, die sich aus dem Kurbelwellensignal ergibt, benutzt. Jeder, von dem Geberradsensor 32 an die Ausgabeeinheit 24 weitergeleitete Impuls wird als Bezugsimpuls 45 bezeichnet. Zum Zeitpunkt jedes Bezugsimpulses 45 wird von der Ausgabeeinheit 24 die Anzahl der Taktimpulse des unabhängigen Taktgebers 25 zwischen zwei vorher registrierten Bezugsimpulsen 45 festgestellt. Aus dieser Anzahl und einem Vergleich der Anzahl mit einem oder mehreren vorher festgestellten Anzahlen von Taktimpulsen können Rückschlüsse über die Dynamik der Brennkraftmaschine gezogen werden. Entsprechend wird ein Verhältniswert berechnet, so dass die zu den Zeitpunkten t1 bzw. t7 berechneten Ereigniszeitpunkte A1 bis A4 bzw. A2 bis A5 entsprechend dieser Veränderung jeweils angepasst werden. Um dann einen richtigen Vergleich zwischen der berechneten Anzahl der Taktimpulse und der Taktimpulse des unabhängigen Taktgebers 25 zu erhalten, wird der Impulszähler 27 zum Zeitpunkt jedes Bezugsimpulses 45 neu initialisiert.

Vorteilhaft bei diesem Verfahren ist, dass auch bei Ab- oder Ausfall des Geberradsensors, d.h. dann, wenn die Bezugsimpulse 45 nicht mehr vorhanden sind, noch nachfolgende Ereignisse ausgegeben werden können, da unabhängig vom Geberradsensor der unabhängige Taktgeber 25 zusammen mit dem Impulszähler 27 eine Ausgabe der berechneten Ereigniszeitpunkte gewährleistet.

Wahlweise kann das Verfahren auch derart durchgeführt werden, dass eine Anpassung der Taktimpulse beispielsweise zu jedem zweiten Bezugsimpuls 45 erfolgt. Voraussetzung für das Funktionieren des Verfahrens ist jedoch, dass die Taktimpulse des unabhängigen Taktgebers 25 in deutlich kleineren Abständen ausgegeben werden als die Bezugsimpulse 45. Weiterhin besitzen die Bezugsimpulse 45 deutlich kleinere Abstände als die Impulse 41, zu denen die Sollwerte berechnet werden.

Bei bestimmten Umständen kann es vorkommen, dass die zu einem Bezugsimpuls 45 berechneten Taktimpulsanzahl bis zum Eintreten eines Ereigniszeitpunkts sehr klein ist bzw. das Ereignis aufgrund der Dynamik schon in der Vergangenheit hätte liegen sollen und so eine negative Zahl ermittelt wurde. Dies tritt beispielsweise dann auf, wenn die Brennkraftmaschine eine starke Beschleunigung erfahren hat. Aus Sicherheitsgründen wird dann, wenn die Anzahl der Taktimpulse kleiner als ein bestimmter Schwellwert ist, der Wert für die Taktimpulse nicht aktualisiert und der vorher berechnete Wert wird beibehalten. So wird das Ereignis auf jeden Fall ausgelöst.

In einem bevorzugten Ausführungsbeispiel ist die Ausgabeeinheit in der Lage, zwei Ausgabemodi zu unterscheiden, den Zündwinkel-Ausgabemodus und den Ladezeit-Ausgabemodus. Beim Zündwinkel-Ausgabemodus wird die Anzahl der bis zum Öffnen des steuerbaren Schalters der Zündendstufe 5 abzuwartenden Taktimpulse bei jedem Bezugsimpuls 45, wie oben beschrieben, aktualisiert. Im Ladezeit-Ausgabemodus wird, nachdem der steuerbare Schalter der Zündendstufe 5 geschlossen wurde, d.h. die Ladezeit begonnen hat, die Anzahl der abzuwartenden Taktimpulse nicht mehr aktualisiert. Dadurch wird gewährleistet, dass genau die berechnete Schließzeit ausgegeben wird, die benötigt wird, um eine für die Zündung ausreichende Energie in der Zündspule bereitzustellen. Somit kann die Verlustleistung minimiert werden.

Bei bestimmten Betriebsarten ist es notwendig, dass die Sollwerteberechnung von einem Zeitpunkt der Sollwertberechnung zum nächsten Zeitpunkt der Sollwertberechnung nicht schnell zwischen verschiedenen Betriebsarten hin- und herwechselt. Dies ist insbesondere der Fall bei Brennkraftmaschinen, die mit Benzindirekteinspritzung arbeiten. Derartige Brennkraftmaschinen können mit dem gleichen, oben geschilderten Verfahren betrieben werden. Als mögliche Betriebsarten können hier die Betriebsart Homogenbetrieb, Homogen-Mager-Betrieb und Schichtbetrieb definiert werden. Diese Betriebsarten sind bei der Benzindirekteinspritzung allgemein bekannt und sollen deshalb hier nicht näher erläutert werden. Um hier ein nachteiliges Hin- und Herschalten zwischen zwei Betriebsarten zu vermeiden, wird hier bei der Sollwertberechnung beachtet, dass über mindestens zwei Sollwertberechnungszeiträume, die auch Segmente genannt werden, dieselbe Betriebsart der Sollwertberechnung zugrunde gelegt wird.

In einem weiteren bevorzugten Ausführungsbeispiel enthält die Vorrichtung zum Betreiben einer Brennkraftmaschine in der Ausgabeeinheit 24 eine Speichereinheit 29, die für jeden Zylinder und für jedes Ereignis Werte enthält, wobei der Inhalt des jeweiligen Speicherplatzes des entsprechenden Zylinders vor Auslösen des Ereignisses abgefragt wird und abhängig vom Inhalt des Speicherplatzes das Auslösen des Ereignisses beeinflusst wird. Desweiteren kann der Inhalt des entsprechenden Speicherplatzes auch durch das Auslösen von Ereignissen verändert werden.

Beispielsweise enthält die Speichereinheit 29 für jeden Zylinder und jedes Ereignis einen sogenannten Erfolgsbit-Speicherplatz ignsuc1 für den ersten Zylinder ignsuc2 für den zweiten Zylinder. Der Inhalt dieser Speicherplätze ist in Figur 2 anhand der Kurven 54 bzw. 64 dargestellt. Der Speicherplatz ignsuc1 enthält zu Beginn der Betrachtungen den Wert 1. Aufgrund der Berechnung eines neuen Sollwerts wird zum Zeitpunkt t1 der Wert dieses Erfolgsbit-Speicherplatzes auf Null gesetzt. Bei Abschluß eines Vorgangs, d.h. hier bei der Ausgabe des Signals für die Öffnung des steuerbaren Schalters der Zündendstufe 5 zum Zeitpunkt t5, wird der Erfolgsbit-Speicherplatz des ersten Zylinders auf den Wert 1 gesetzt. Nach der Berechnung eines neuen Sollwerts zum Zeitpunkt t7 wird der Erfolgsbit-Speicherplatz wieder auf den Wert Null gesetzt. Das Verfahren kann entsprechend auch mit komplementären Werten durchgeführt werden, d.h. der Erfolgsbit-Speicherplatz kann den Wert Null aufweisen, wenn die Ausgabe des Signals zur Öffnung des steuerbaren Schalters erfolgte, und bei Berechnung eines neuen Sollwerts zu dem Wert 1 verändert werden.

In der Ausgabeeinheit kann nun der Wert dieses Erfolgsbit-Speicherplatzes abgefragt werden, bevor ein neuer Zündvorgang eingeleitet wird. Enthält der Erfolgsbit-Speicherplatzes des jeweiligen Zylinders noch den Wert 1, d.h. die Zündung wurde ausgeführt und noch kein neuer Sollwert geladen, ist es nicht plausibel, dass eine neue Zündung ausgeführt wird. Somit wird für diesen Fall das Schließen des steuerbaren Schalters der Zündendstufe nicht durchgeführt. Dieser Plausibilitätskonflikt wird an die Fehlerverwaltung des Steuergeräts 20 gemeldet.

Desweiteren beinhaltet die Speichereinheit 29 in einem bevorzugten Ausführungsbeispiel für jeden Zylinder und jedes Ereignis einen sogenannten Aktivitätsbit-Speicherplatz. Die Werte, die ein Aktivitätsbit-Speicherplatz für den ersten und den zweiten Zylinder aufweist, sind in Figur 2 anhand der Kurven 56 und 66 dargestellt und mit ignactl und ignact2 bezeichnet. Solange der Zündvorgang nicht eingeleitet ist, weist der Aktivitätsbit-Speicherplatz den Wert 0 auf. Wird mit dem Laden der Zündspule, d.h. mit dem Stromfluß durch die Primärspule 3 begonnen, dann wird dem Aktivitätsbit-Speicherplatz der Wert 1 zugewiesen und bei Auslösen des Endes des Stromflusses durch die Primärspule wird dem Aktivitätsbit-Speicherplatz des jeweiligen Zylinders der Wert 0 zugewiesen. Somit weist der Aktivitätsbit-Speicherplatz während des Ladens der Zündspule den Wert 1 auf und sonst den Wert 0. Dabei kann es auch konfiguriert werden, dass der Aktivitätsbit-Speicherplatz während des Ladens der Zündspule den Wert 0 besitzt und sonst den Wert 1.

Während des Ladens der Zündspule des jeweiligen Zylinders ist es nicht sinnvoll, dass neue Sollwerte für das Ereignis "Zünden" geladen werden. Deshalb wird das Laden neuer Sollwerte für den Zeitpunkt t1 oder t7 dann unterdrückt, wenn für den jeweiligen Zylinder der Aktivitätsbit-Speicherplatz den Wert 1 aufweist. In einem weiteren Ausführungsbeispiel wird anhand des auf dem Aktivitätsbit-Speicherplatz des jeweiligen Zylinders gespeicherten Wertes für den Ladezeit-Ausgabemodus entnommen werden, ob ein Laden der Zündspule erfolgt. Beispielsweise ist es dann, wenn der Aktivitätsbit-Speicherplatz den Wert 1 besitzt, für die Ausgabeeinheit 24 untersagt, den abzuwartende Anzahl der bis zum Öffnen des steuerbaren Schalters von Taktimpulsen zu aktualisieren. In einem weiteren Ausführungsbeispiel wird anhand der Zeitdauer, über die der Aktivitätsbit-Speicherplatz eines Zylinders einen Wert 1 besitzt, ermittelt werden, wie lang die Ladezeit dauert. Übersteigt die Ladezeit einen Schwellwert, dann dauert das Laden der Zündspule unplausibel lange und es wird eine Zwangszündung eingeleitet. Desweiteren kann anhand des Inhalts der Aktivitätsbit-Speicherplätze ermittelt werden, wie viele Zündspulen sich gleichzeitig im Zustand "Laden" befinden.

In einem weiteren Ausführungsbeispiel kann in der Speichereinheit 29 für jeden Zylinder noch ein Diagnosebit-Speicherplatz vorgesehen sein. Für einen ersten bzw. zweiten Zylinder ist der Wert eines derartigen Diagnosebit-Speicherplatzes in Figur 2 anhand der Kurven 53 und 68 dargestellt. Zu einem bestimmten Zeitpunkt vor dem Auslösen der Beendigung des Ladens der Zündspule zum Zeitpunkt t5 wird der Diagnosebit-Speicherplatz des jeweiligen Zylinders mit einem Wert 1 und zu einer bestimmten Zeit nach dem Auslösen des Endes des Ladens der Zündspule wird der Diagnosebit-Speicherplatz mit einem Wert 0 belegt. Dies kann beispielsweise für den in Figur 2 dargestellten ersten Zylinder zu einem Zeitpunkt t4 und t8 geschehen. Für den zweiten Zylinder wird der Diagnosebit-Speicherplatz zum Zeitpunkt t9 auf den Wert 1 gesetzt.

Während der Zeit, in der der Diagnosebit-Speicherplatz den Wert 1 aufweist, wird die Diagnose d.h. beispielsweise die Überprüfung von Hard- und Softwarefunktionen für den jeweiligen Zylinder freigegeben. Es werden hier Werte von Diagnosekomponenten angefordert und im Steuergerät 20 verarbeitet. Somit wird sichergestellt, dass für den jeweils richtigen Zylinder die Diagnose betrieben wird und somit die für den jeweiligen Zylinder zutreffenden Werte verarbeitet werden.

Derartige Speicherplätze sind in einem weiteren bevorzugten Ausführungsbeispiel analog auch für jeden Zylinder für das Ereignis Einspritzung und andere durch das oben beschriebene Verfahren gesteuerte Ereignisse vorgesehen.

## Patentansprüche

1. Verfahren zum Betreiben einer Brennkraftmaschine, wobei
a) synchron zu der zyklischen Bewegung mindestens eines Teils der Brennkraftmaschine Bezugsimpulse (45) erzeugt werden,
b) mittels einer Ausgabeeinheit (24) zu bestimmten, fest vorgegebenen Abständen der zyklischen Bewegung mindestens ein Ereigniszeitpunkt (t2, t3, t5, t10) für das Eintreten mindestens eines Ereignisses berechnet wird,
c) mittels eines unabhängigen Taktgebers (25) einer Ausgabeeinheit (24) Taktimpulse erzeugt werden, deren Abstand unabhängig von der Bewegung ist, wobei die Abstände der Taktimpulse kleiner sind als die Abstände der Bezugsimpulse (45),
d) der mindestens eine Ereigniszeitpunkt (t2, t3, t5, t10) als Anzahl von Taktimpulsen des unabhängigen Taktgebers (25) ausgedrückt wird,
e) bei Erreichen der Anzahl der Taktimpulse durch einen Impulszähler (27) das mindestens eine Ereignis ausgelöst wird,
**dadurch gekennzeichnet, dass**
f) durch die Beobachtung der zwischen mindestens zwei aufeinanderfolgenden Bezugsimpulsen (45) gezählten Taktimpulse des unabhängigen Taktgebers (25) ein Verhältniswert gebildet wird, der eine Information über den zukünftigen zeitlichen Ablauf der Bewegung enthält, und dass
g) der Verhältniswert genutzt wird, um die Anzahl der Taktimpulse zu verändern.

2. Verfahren nach Anspruch 1, **dadurch gekennzeichnet, dass** zu jedem Bezugsimpuls (45) der Impulszähler (27) initialisiert wird und dass unter Nutzung des Verhältniswerts die Anzahl der Taktimpulse des unabhängigen Taktgebers (25) bis zu dem mindestens einen Ereigniszeitpunkt (t2, t3, t5, t10) neu berechnet wird.

3. Verfahren nach Anspruch 1, **dadurch gekennzeichnet, dass** der mindestens eine Ereigniszeitpunkt (t2, t3, t5, t10) bei einem Vorhandensein von mehreren Zylindern zylinderindividuell berechnet wird.

4. Verfahren nach einem der vorhergehenden Ansprüche, **dadurch gekennzeichnet, dass** der mindestens eine Ereigniszeitpunkt (t2, t3, t5, t10) mittels einer Ausgabeeinheit (24) aus mindestens einem Sollwert der Brennkraftmaschine berechnet wird, wobei der mindestens eine Sollwert mittels einer Steuereinheit (22) abhängig von mindestens einem Betriebsparameter und mindestens einer Betriebsart anhand von in der Steuereinheit (22) gespeicherten Kennlinien bestimmt wird, wobei der mindestens eine Sollwert von der Steuereinheit (22) an die Ausgabeeinheit (24) übergeben wird.

5. Verfahren nach Anspruch 4, **dadurch gekennzeichnet, dass** ein Zündwinkel, ein Winkel, zu dem der steuerbare Schalter (5) geschlossen wird, eine Schließzeit-Dauer, eine Anzahl von Funken in einem Funkenband, eine Nachladewinkel oder eine Offenzeit Sollwerte darstellen.

6. Verfahren nach Anspruch 4 oder 5, **dadurch gekennzeichnet, dass** bei einer Brennkraftmaschine mit mehreren Zylindern die Sollwerte in zeitlicher Reihenfolge an die Ausgabeeinheit (24) übergeben werden, wobei die Ausgabeeinheit (24) vor der Berechnung der Ereigniszeitpunkte eine Zuordnung der Sollwerte zu den in zeitlicher Reihenfolge einen oberen Zünd-Totpunkt durchlaufenden Zylindern vornimmt.

7. Verfahren nach Anspruch 4, **dadurch gekennzeichnet, dass** als Betriebsparameter mindestens eine Temperatur, darunter vorzugsweise eine Temperatur der Außenluft, eine Kühlwassertemperatur und/oder eine Ansaugtemperatur sowie eine Stellung der Drosselklappe, ein Vorhandensein einer Abgasrückführung, ein Klopfsignal, ein Lastsignal und/oder eine Drehzahl abgefragt werden und als mögliche Betriebsarten in Bezug auf den Zeitpunkt nach dem Start der Brennkraftmaschine oder in Bezug auf die Drehzahl oder Drehzahldynamik die Betriebsarten Betrieb in der Startphase, Dynamikbetrieb, Normalbetrieb, Leerlaufbetrieb und/oder ein Volllastbetrieb unterschieden werden und in Bezug auf die Benzindirekteinspritzung Homogenbetrieb, Homogen-Magerbetrieb, Schichtbetrieb unterschieden werden, wobei die Betriebsarten in Bezug auf den Zeitpunkt nach dem Start oder in Bezug auf die Drehzahl mit den Betriebsarten in Bezug auf die Benzindirekteinspritzung kombinierbar sind.

8. Verfahren nach Anspruch 4, **dadurch gekennzeichnet, dass** die zur Berechnung der Sollwerte verwendete Betriebsart über die Dauer von mindestens zwei bestimmten Abständen der zyklischen Bewegung nicht verändert wird.

9. Verfahren nach Anspruch 1, **dadurch gekennzeichnet, dass** die Bewegung mindestens eines Teils der Brennkraftmaschine die Bewegung einer Kurbelwelle ist und dass der bestimmte, fest vorgegebene Abstand der zyklischen Bewegung Abstände einer bestimmten, fest vorgegebenen Winkellage der Kurbelwelle vor einem oberen Zünd-Totpunkt sind.

10. Verfahren nach Anspruch 1, **dadurch gekennzeichnet, dass** dann, wenn die bei dem Bezugsimpuls (45) berechnete Anzahl der Taktimpulse kleiner als ein erster Schwellwert ist, die in einem vorhergehenden Schritt berechnete Anzahl der Taktimpulse nicht verändert wird.

11. Verfahren nach Anspruch 3, **dadurch gekennzeichnet, dass** der mindestens eine Ereigniszeitpunkt (t2, t3, t5, t10) zu den bestimmten, fest vorgegebenen Abständen der zyklischen Bewegung gleichzeitig für eine bestimmte, fest vorgegebene Anzahl von Zylindern zylinderindividuell berechnet wird.

12. Verfahren nach einem der vorhergehenden Ansprüche, **dadurch gekennzeichnet, dass** mindestens ein Speicherplatz in einer Speichereinheit (29) der Ausgabeeinheit (24) für jeden Zylinder der Brennkraftmaschine und für jedes Ereignis einen ersten oder zweiten Wert enthält, wobei der Inhalt des mindestens einen Speicherplatzes des entsprechenden Zylinders vor Auslösen des mindestens einen Ereignisses für den jeweiligen Zylinder abgefragt wird und abhängig vom Inhalt des mindestens einen Speicherplatzes das Auslösen des mindestens einen Ereignisses beeinflusst wird und/oder der Inhalt des mindestens einen Speicherplatzes des entsprechenden Zylinders durch das Auslösen des mindestens einen Ereignisses für den jeweiligen Zylinder verändert wird.

13. Verfahren nach einem der vorhergehenden Ansprüche, **dadurch gekennzeichnet, dass** das mindestens eine Ereignis mindestens den Beginn eines Vorgangs und das Ende eines Vorgangs, vorzugsweise den Schließzeitbeginn und das Schließzeitende, und entsprechend der mindestens eine Ereigniszeitpunkt (t2, t3, t5, t10) einen Ereignisbeginnzeitpunkt (t2, t3) und einen Ereignisendzeitpunkt (t5, t10), vorzugsweise den Schließzeitbeginnzeitpunkt und den Schließzeitendzeitpunkt, umfassen.

14. Verfahren nach Anspruch 13, **dadurch gekennzeichnet, dass** ein Erfolgsbit-Speicherplatz durch das Auslösen des Endes des Ereignisses des entsprechenden Zylinders und des entsprechenden Ereignisses auf einen ersten Wert gesetzt wird, wobei durch Berechnung eines neuen, mindestens einen Ereigniszeitpunkts für das jeweilige Ereignis in den bestimmten, fest vorgegebenen Abständen der Erfolgsbit-Speicherplatz des entsprechenden Zylinders und des entsprechenden Ereignisses auf einen zweiten Wert gesetzt wird.

15. Verfahren nach Anspruch 14, **dadurch gekennzeichnet, dass**, solange der Erfolgsbit-Speicherplatz des jeweiligen Zylinders und des jeweiligen Ereignisses einen ersten Wert aufweist, das Ereignis für den jeweiligen Zylinder nicht ausgelöst wird.

16. Verfahren nach Anspruch 13, **dadurch gekennzeichnet, dass** ein Aktivitätsbit-Speicherplatz eines Zylinders und eines Ereignisses durch das Auslösen des Beginns dieses Ereignisses für diesen Zylinder auf einen ersten Wert gesetzt wird und dieser Aktivitätsbit-Speicherplatz durch das Auslösen des Endes dieses Ereignisses für diesen Zylinder auf einen zweiten Wert gesetzt wird.

17. Verfahren nach Anspruch 16, **dadurch gekennzeichnet, dass** solange der Aktivitätsbit-Speicherplatz eines Zylinders und eines Ereignisses einen ersten Wert aufweist, keine neuen Sollwerte für dieses Ereignis und diesen Zylinder berechnet werden.

18. Verfahren nach Anspruch 16, **dadurch gekennzeichnet, dass** die Summe der Zylinder ermittelt wird, deren Aktivitätsbit-Speicherplatz einen ersten Wert aufweist und/oder dass die Anzahl der Bezugsimpulse (45) eines Zylinders und/oder die Anzahl der Abstände der zyklischen Bewegung ermittelt wird, während denen der Aktivitätsbit-Speicherplatz des jeweiligen Zylinders den ersten Wert unverändert hält.

19. Vorrichtung zum Betreiben einer Brennkraftmaschine, wobei eine Sensoreinheit (32) vorgesehen ist, mittels der synchron zu der zyklischen Bewegung mindestens eines Teils der Brennkraftmaschine Bezugsimpulse (45) erzeugbar sind, wobei eine Ausgabeeinheit (24) vorgesehen ist, mittels der zu bestimmten, fest vorgegebenen Abständen der zyklischen Bewegung mindestens ein Ereigniszeitpunkt (t2, t3, t5, t10) für das Eintreten mindestens eines Ereignisses berechnet wird, wobei ein unabhängiger Taktgeber (25) einer Ausgabeeinheit (24) vorgesehen ist, mittels dem Taktimpulse erzeugbar sind, deren Abstände unabhängig von der Bewegung sind, wobei die Abstände der Taktimpulse kleiner sind als die Abstände der Bezugsimpulse (45), wobei mittels der Ausgabeeinheit (24) der mindestens eine Ereigniszeitpunkt (t2, t3, t5, t10) als Anzahl von Taktimpulsen des unabhängigen Taktgebers (25) ausdrückbar ist, wobei mittels der Ausgabeeinheit (24) bei Erreichen der Anzahl der Taktimpulse durch einen Impulszähler (27) das mindestens eine Ereignis auslösbar ist, **dadurch gekennzeichnet, dass** mittels der Ausgabeeinheit (24) durch die Beobachtung der zwischen mindestens zwei aufeinanderfolgenden Bezugsimpulsen (45) gezählten Taktimpulse des unabhängigen Taktgebers (25) ein Verhältniswert bildbar ist, der eine Information über den zukünftigen zeitlichen Ablauf der Bewegung enthält, und dass Mittel vorgesehen sind, die auf Basis des Verhältniswerts mittels der Ausgabeeinheit (24) die Anzahl der Taktimpulse verändern.

20. Vorrichtung nach Anspruch 19, **dadurch gekennzeichnet, dass** ein Impulszähler (27) derart vorgesehen ist, dass er zu jedem Bezugsimpuls (45) initialisierbar ist und dass unter Nutzung des Verhältniswerts die Anzahl der Taktimpulse des unabhängigen Taktgebers (25) bis zu dem mindestens einen Ereigniszeitpunkt (t2, t3, t5, t10) neu berechenbar ist.

21. Vorrichtung nach Anspruch 19, **dadurch gekennzeichnet, dass** mittels der Ausgabeeinheit (24) mindestens ein Ereigniszeitpunkt (t2, t3, t5, t10) bei einem Vorhandensein von mehreren Zylindern zylinderindividuell berechenbar ist.

22. Vorrichtung nach einem der Ansprüche 19 bis 21, **dadurch gekennzeichnet, dass** mittels der Ausgabeeinheit (24) der mindestens eine Ereigniszeitpunkt (t2, t3, t5, t10) aus mindestens einem Sollwert der Brennkraftmaschine berechenbar ist, wobei eine Steuereinheit (22) vorgesehen ist, so dass der mindestens eine Sollwert abhängig von mindestens einem Betriebsparameter und mindestens einer Betriebsart anhand von in der Steuereinheit (22) gespeicherten Kennlinien bestimmbar ist, wobei der mindestens eine Sollwert von der Steuereinheit (22) an die Ausgabeeinheit (24) über eine Verbindung (28) übergebbar ist.

23. Vorrichtung nach Anspruch 22, **dadurch gekennzeichnet, dass** mindestens ein Sensor (36) vorgesehen ist, mittels dem mindestens ein Betriebsparameter detektierbar ist, wobei als Betriebsparameter vorzugsweise eine Temperatur der Außenluft und/oder eine Kühlwassertemperatur und/oder eine Temperatur des Ansaugtraktes und/oder eine Stellung der Drosselklappe und/oder ein Vorhandensein einer Abgasrückführung und/oder ein Klopfsignal und/oder ein Lastsignal und/oder eine Drehzahl abfragbar ist, wobei der Wert des mindestens einen Betriebsparameters von dem mindestens einen Sensor (36) über eine Verbindung (38) an die Steuereinheit (22) übergebbar ist.

24. Vorrichtung nach einem der Ansprüche 19 bis 23, **dadurch gekennzeichnet, dass** mindestens ein Speicherplatz in einer Speichereinheit (29) der Ausgabeeinheit (24) vorgesehen ist, der für jeden Zylinder der Brennkraftmaschine und für jedes Ereignis einen ersten oder einen zweiten Wert enthält, wobei der Inhalt des mindestens einen Speicherplatzes des entsprechenden Zylinders vor Auslösung des mindestens einen Ereignisses für den jeweiligen Zylinder abfragbar ist und abhängig vom Inhalt des mindestens einen Speicherplätzes das Auslösen des mindestens einen Ereignisses beeinflußt wird oder der Inhalt des mindestens einen Speicherplatzes des entsprechenden Zylinders durch das Auslösen des mindestens einen Ereignisses für den jeweiligen Zylinders veränderbar ist.

## Revendications

1. Procédé de gestion d'un moteur à combustion interne, selon lequel :
(a) on crée des impulsions de référence (45) en synchronisation avec le mouvement cyclique d'au moins une partie du moteur à combustion interne,
(b) on calcule au moyen d'une unité de sortie (24) à des intervalles du mouvement cyclique donnés, prédéfinis de manière fixe, au moins un instant d'événement (t2, t3, t5, t10) pour l'apparition d'au moins un événement,
(c) on crée des impulsions d'horloge au moyen d'un générateur d'horloge indépendant, (25) d'une unité de sortie (24), dont l'intervalle est indépendant du mouvement, et dans lequel les intervalles entre les impulsions d'horloge sont plus courts que les intervalles entre les impulsions de références (45),
(d) on exprime l'instant d'événement (t2, t3, t5, t10) en nombre d'impulsions d'horloge du générateur d'horloge indépendant (25),
(e) on déclenche au moins un événement lorsque le nombre d'impulsions d'horloge est atteint par un compteur d'impulsions (27)
**caractérisé en ce qu'**
(f) on détermine, en surveillant les impulsions d'horloge du générateur d'horloge indépendant (25) comptées entre au moins deux impulsions de référence (45) se succédant, une valeur proportionnelle qui contient une information sur le déroulement temporel futur du mouvement, et
(g) et on utilise la valeur proportionnelle pour modifier le nombre des impulsions d'horloge.

2. Procédé selon la revendication 1,
**caractérisé en ce qu'**
on réinitialise le compteur d'impulsions (27) à chaque impulsion de référence (45), et on recalcule le nombre d'impulsions d'horloge du générateur d'horloge indépendant (25) existant jusqu'à l'instant d'événement (t2, t3, t5, t10) en utilisant la valeur proportionnelle.

3. Procédé selon la revendication 1,
**caractérisé en ce qu'**
on calcule l'instant d'événement (t2, t3, t5, t10) individuellement par cylindre quand plusieurs cylindres sont présents.

4. Procédé selon l'une quelconque des revendications précédentes,
**caractérisé en ce qu'**
on calcule l'instant d'événement (t2, t3, t5, t10) au moyen d'une unité de sortie (24) à partir d'au moins une valeur de consigne du moteur à combustion interne, dans lequel au moins une valeur de consigne est déterminée au moyen d'une unité de commande (22) en fonction d'au moins un paramètre de fonctionnement et d'au moins un mode de fonctionnement au moyen de courbes caractéristiques mémorisées dans l'unité de commande (22), cette au moins une valeur de consigne étant transmise de l'unité de commande (22) à l'unité de sortie (24).

5. Procédé selon la revendication 4,
**caractérisé en ce que**
la valeur de consigne représente un angle d'allumage, un angle auquel le commutateur pouvant être commandé (5) est fermé, une durée de temps de fermeture, un nombre d'étincelles dans un éclateur, un angle de recharge ou un de temps d'ouverture.

6. Procédé selon la revendication 4 ou 5,
**caractérisé en ce que**
dans un moteur à combustion interne présentant plusieurs cylindres, les valeurs de consignes sont transmises à l'unité de sortie (24) selon une séquence temporelle, et l'unité de sortie (24) attribue les valeurs de consignes aux cylindres passant par un point mort supérieur d'allumage selon une séquence temporelle avant le calcul des instants d'événement.

7. Procédé selon la revendication 4,
**caractérisé en ce qu'**
on consulte comme paramètre de fonctionnement au moins une température, dont de préférence une température de l'air extérieur, une température de liquide de refroidissement et/ou une température d'aspiration ainsi qu'une position du papillon, la présence d'un système de recyclage des gaz d'échappement, un signal de cliquetis, un signal de charge, et/ou un régime et on distingue comme modes de fonctionnement possibles, par rapport à l'instant après le démarrage du moteur à combustion interne ou par rapport au régime ou au comportement dynamique du régime, les modes de fonctionnement suivants : fonctionnement dans la phase de démarrage, fonctionnement dynamique, fonctionnement en charge partielle, fonctionnement au ralenti et/ou fonctionnement en pleine charge, et par rapport à l'injection directe d'essence, on distingue les modes homogène, pauvre, stratifié, et les modes de fonctionnement par rapport à l'instant après le démarrage ou par rapport au régime peuvent être combinés avec les modes de fonctionnement par rapport à l'injection directe d'essence.

8. Procédé selon la revendication 4,
**caractérisé en ce que**
le mode de fonctionnement utilisé pour calculer les valeurs de consigne ne varie pas sur la durée d'au moins deux intervalles donnés du mouvement cyclique.

9. Procédé selon la revendication 1,
**caractérisé en ce que**
le mouvement d'au moins une partie du moteur à combustion interne est le mouvement d'un vilebrequin, et l'intervalle donné, prédéfini de manière fixe, du mouvement cyclique correspond à des intervalles donnés, prédéfinis de manière fixe, d'une position angulaire donnée du vilebrequin avant un point mort supérieur.

10. Procédé selon la revendication 1,
**caractérisé en ce qu'**
ensuite, on ne modifie pas le nombre d'impulsions d'horloge calculé dans une étape précédente quand le nombre d'impulsions d'horloge calculé lors d'une impulsion de référence (45) est inférieur à une première valeur de seuil.

11. Procédé selon la revendication 3,
**caractérisé en ce qu'**
on calcule simultanément pour un nombre donné, prédéfini de manière fixe, de cylindres, au moins un instant d'événement (t2, t3, t5, t10) aux intervalles donnés, prédéfinis de manière fixe, du mouvement cyclique individuellement par cylindre.

12. Procédé selon l'une quelconque des revendications précédentes,
**caractérisé en ce qu'**
au moins un emplacement de mémoire d'une unité de mémoire (29) de l'unité de sortie (24) contient pour chaque cylindre du moteur à combustion interne et pour chaque événement une première ou une deuxième valeur, on consulte le contenu d'au moins un emplacement de mémoire du cylindre correspondant avant le déclenchement d'au moins un événement pour le cylindre considéré, et en fonction du contenu d'au moins un emplacement de mémoire, on agit sur le déclenchement d'au moins un événement et/ou on modifie le contenu d'au moins un emplacement de mémoire du cylindre correspondant par le déclenchement d'au moins un événement pour le cylindre considéré.

13. Procédé selon l'une quelconque des revendications précédentes,
**caractérisé en ce qu'**
au moins un événement comprend le début et la fin d'une opération, de préférence le début et la fin du temps de fermeture, et par conséquent l'instant d'événement (t2, t3, t5, t10) comprend un instant de début d'événement (t2, t3) et un instant de fin d'événement (t5, t10), de préférence l'instant de début et l'instant de fin du temps de fermeture.

14. Procédé selon la revendication 13,
**caractérisé en ce qu'**
un emplacement de mémoire de bit de confirmation est initialisé à une première valeur par le déclenchement et de la fin de l'événement du cylindre correspondant, et de l'événement correspondant, et en calculant un nouveau et au moins un instant d'événement pour l'événement considéré dans les intervalles donnés, prédéfinis de manière fixe, l'emplacement de mémoire de bit de confirmation du cylindre et de l'événement correspondants est initialisé à une deuxième valeur.

15. Procédé selon la revendication 14,
**caractérisé en ce que**
tant que l'emplacement de mémoire de bit de confirmation du cylindre et de l'événement considérés présente la première valeur, on ne déclenche pas l'événement pour le cylindre considéré.

16. Procédé selon la revendication 13,
**caractérisé en ce qu'**
un emplacement de mémoire de bit d'activité d'un cylindre et d'un événement est initialisé à une première valeur par le déclenchement du début de cet événement pour ce cylindre et cet emplacement de mémoire de bit d'activité est initialisé à une deuxième valeur par le déclenchement de la fin de cet événement pour ce cylindre.

17. Procédé selon la revendication 16,
**caractérisé en ce que**
tant que l'emplacement de mémoire de bit d'activité d'un cylindre et d'un événement présente une première valeur, on ne calcule aucune nouvelle valeur de consigne pour cet événement et ce cylindre.

18. Procédé selon la revendication 16,
**caractérisé en ce qu'**
on détermine la somme des cylindres dont l'emplacement de mémoire de bit d'activité présente une première valeur et/ou on détermine le nombre des impulsions de référence (45) d'un cylindre, et/ou le nombre des intervalles du mouvement cyclique, pendant lesquels l'emplacement de mémoire de bit d'activité du cylindre considéré garde la première valeur inchangée.

19. Dispositif de fonctionnement d'un moteur à combustion interne, dans lequel une unité de capteur (32) permet de créer des impulsions de référence (45) en synchronisation avec le mouvement cyclique d'au moins une partie du moteur à combustion interne, une unité de sortie (24) permet de calculer au moins un instant d'événement (t2, t3, t5, t10) pour l'apparition d'au moins un événement à des intervalles donnés, prédéfinis de manière fixe, du mouvement cyclique, un générateur d'horloge indépendant (25) d'une unité de sortie (24) permet de créer des impulsions d'horloge dont les intervalles sont indépendants du mouvement, les intervalles entre les impulsions d'horloge étant plus courts que les intervalles entre les impulsions de référence (45) et l'unité de sortie (24) permettant d'exprimer l'au moins un instant d'événement (t2, t3, t5, t10) en un nombre d'impulsions d'horloge du générateur d'horloge (25) et l'unité de sortie (24) pouvant déclencher l'au moins un événement quand le nombre d'impulsions d'horloge est atteint par un compteur d'impulsions (27),
**caractérisé en ce qu'**
en surveillant les impulsions d'horloge du générateur d'horloge indépendant (25) comptées entre au moins deux impulsions de référence (45) se succédant, l'unité de sortie (24) peut déterminer une valeur proportionnelle qui contient une information sur le déroulement temporel futur du mouvement, et des moyens modifient sur la base de la valeur proportionnelle, le nombre d'impulsions d'horloge au moyen de l'unité de sortie (24).

20. Dispositif selon la revendication 19,
**caractérisé en ce qu'**
un compteur d'impulsions (27) peut être réinitialisé à chaque impulsion de référence (45), et en utilisant la valeur proportionnelle, on peut recalculer le nombre des impulsions d'horloge du générateur d'horloge indépendant (25) existant jusqu'à au moins un instant d'événement (t2, t3, t5, t10).

21. Dispositif selon la revendication 19,
**caractérisé en ce qu'**
au moyen de l'unité de sortie (24), on peut calculer l'instant d'événement (t2, t3, t5, t10) individuellement par cylindre quand plusieurs cylindres sont présents.

22. Dispositif selon l'une quelconque des revendications 19 à 21,
**caractérisé en ce qu'**
au moyen de l'unité de sortie (24), on peut calculer l'instant d'événement (t2, t3, t5, t10) à partir d'au moins une valeur de consigne du moteur à combustion interne, et une unité de commande (22) est prévue de façon à ce qu'au moins une valeur de consigne puisse être déterminée en fonction d'au moins un paramètre de fonctionnement et d'au moins un mode de fonctionnement au moyen de courbes caractéristiques mémorisées dans l'unité de commande (22), cette au moins une valeur de consigne pouvant être transmise de l'unité de commande (22) à l'unité de sortie (24) à travers une connexion (28).

23. Dispositif selon la revendication 22,
**caractérisé en ce qu'**
au moins un capteur (36) permet de détecter au moins un paramètre de fonctionnement, et on peut de préférence consulter comme paramètre de fonctionnement une température de l'air extérieur et/ou une température du liquide de refroidissement et/ou une température de la section d'aspiration et/ou une position du papillon et/ou la présence d'un système de recyclage des gaz d'échappement et/ou un signal de cliquetis et/ou un signal de charge et/ou un régime, et la valeur d'au moins un paramètre de fonctionnement peut être transmise d'au moins un capteur (36) à l'unité de commande (22) à travers une connexion (38).

24. Dispositif selon l'une quelconque des revendications 19 à 23,
**caractérisé en ce qu'**
au moins un emplacement de mémoire d'une unité de mémoire (29) de l'unité de sortie (24) contient pour chaque cylindre du moteur à combustion interne et pour chaque événement une première ou une deuxième valeur, et on peut consulter le contenu d'au moins un emplacement de mémoire du cylindre correspondant avant le déclenchement d'au moins un événement pour le cylindre considéré, et en fonction du contenu d'au moins un emplacement de mémoire, on agit sur le déclenchement d'au moins un événement, ou en déclenchant au moins un événement pour le cylindre considéré, on peut modifier le contenu d'au moins un emplacement de mémoire du cylindre correspondant.

## Claims

1. Method for operating an internal combustion engine,
a) reference pulses (45) being generated in synchronism with the cyclical movement of at least part of the internal combustion engine,
b) at least one event time (t2, t3, t5, t10) being calculated by means of an output unit (24) at specific, fixedly predefined intervals of the cyclical movement for the occurrence of at least one event,
c) clock pulses whose interval is independent of the movement being generated by means of an independent clock pulse transmitter (25) of an output unit (24); with the intervals between the clock pulses being shorter than the intervals between the reference pulses (45),
d) the at least one event time (t2, t3, t5, t10) being expressed as a number of clock pulses of the independent clock pulse transmitter (25),
e) the at least one event being triggered when the number of clock pulses is reached by a pulse counter (27), **characterized in that**
f) a ratio value, which contains information about the future time profile of the movement, is formed by observing the clock pulses of the independent clock pulse generator (25) which are counted between at least two successive reference pulses (45), and that
g) the ratio value is used to change the number of clock pulses.

2. Method according to Claim 1, **characterized in that** the pulse counter (27) is initialized at each reference pulse (45), and **in that** the number of clock pulses of the independent clock pulse transmitter (25) up to the at least one event time (t2, t3, t5, t10) is recalculated using the ratio value.

3. Method according to Claim 1, **characterized in that** the at least one event time (t2, t3, t5, t10) is calculated on a cylinder-specific basis when a plurality of cylinders are present.

4. Method according to one of the preceding claims, **characterized in that** the at least one event time (t2, t3, t5, t10) is calculated from at least one setpoint value of the internal combustion engine by means of an output unit (24), with the at least one setpoint value being determined by means of a control unit (22) as a function of at least one operating parameter and at least one operating mode by reference to characteristic curves stored in the control unit (22), with the at least one setpoint value being transferred from the control unit (22) to the output unit (24).

5. Method according to Claim 4, **characterized in that** setpoint values are an ignition angle, an angle at which the controllable switch (5) is closed, a closing time period, a number of sparks in a spark belt, a recharging angle or an open time.

6. Method according to Claim 4 or 5, **characterized in that**, in an internal combustion engine with a plurality of cylinders, the setpoint values are transferred to the output unit (24) in a chronological sequence, in which case, before the calculation of the event times, the output unit (24) makes an assignment of the setpoint values to the cylinders passing through a top dead centre of the ignition in a chronological sequence.

7. Method according to Claim 4, **characterized in that** at least one temperature, preferably including a temperature of the external air, a cooling water temperature and/or an intake temperature as well as a position of the throttle valve, a presence of exhaust gas recirculation, a knocking signal, a load signal and/or a rotational speed are interrogated as operating parameters, and the operating modes operation in the starting phase, dynamic operation, normal operation, idling operation and/or a full-load operation are differentiated as possible operating modes relating to the time after the start of the internal combustion engine or relating to the rotational speed or rotational speed dynamic, and homogeneous operation, homogeneous lean operation, stratified operation are differentiated relating to the direct injection of petrol, in which case the operating modes relating to the time after the start or relating to the rotational speed can be combined with the operating modes relating to the direct injection of petrol.

8. Method according to Claim 4, **characterized in that** the operating mode which is used in order to calculate the setpoint values is not changed over the duration of at least two specific intervals of the cyclical movement.

9. Method according to Claim 1, **characterized in that** the movement of at least part of the internal combustion engine is the movement of a crankshaft, and **in that** the specific, fixedly predefined interval of the cyclical movement comprises intervals of a specific, fixedly predefined angular position of the crankshaft before a top dead centre of the ignition.

10. Method according to Claim 1, **characterized in that** when the number of clock pulses which is calculated at the reference pulse (45) is smaller than a first threshold value, the number of clock pulses which is calculated in a preceding step is not changed.

11. Method according to Claim 3, **characterized in that** the at least one event time (t2, t3, t5, t10) is calculated simultaneously on a cylinder-specific basis for a specific, fixedly predefined number of cylinders at the specific, fixedly predefined intervals of the cyclical movement.

12. Method according to one of the preceding claims, **characterized in that** at least one memory location in a memory unit (29) of the output unit (24) contains a first or second value for each cylinder of the internal combustion engine and for each event, with the content of the at least one memory location of the corresponding cylinder being interrogated before the at least one event for the respective cylinder is triggered, and the triggering of the at least one event is influenced as a function of the content of the at least one memory location, and/or the content of the at least one memory location of the corresponding cylinder is changed by triggering the at least one event for the respective cylinder.

13. Method according to one of the preceding claims, **characterized in that** the at least one event comprises at least the start of a process and the end of a process, preferably the start of closing time and the end of closing time, and correspondingly the at least one event time (t2, t3, t5, t10) comprises an event start time (t2, t3) and an event end time (t5, t10), preferably the closing time start time and the closing time end time.

14. Method according to Claim 13, **characterized in that** a success bit memory location is set to a first value by triggering the end of the event of the corresponding cylinder and of the corresponding event, with the success bit memory location of the corresponding cylinder and of the corresponding event being set to a second value by calculating at least one new event time for the respective event at the specific, fixedly predefined intervals.

15. Method according to Claim 14, **characterized in that** the event for the respective cylinder is not triggered as long as the success bit memory location of the respective cylinder and of the respective event has a first value.

16. Method according to Claim 13, **characterized in that** an activity-bit memory location of a cylinder and of an event is set to a first value by triggering the start of this event for this cylinder, and this activity-bit memory location is set to a second value by triggering the end of this event for this cylinder.

17. Method according to Claim 16, **characterized in that**, as long as the activity-bit memory location of a cylinder and of an event has a first value, no new setpoint values are calculated for this event and this cylinder.

18. Method according to Claim 16, **characterized in that** the sum of the cylinders whose activity-bit memory location has a first value is determined, and/or **in that** the number of reference pulses (45) of a cylinder and/or the number of intervals of the cyclical movement during which the activity-bit memory location of the respective cylinder contains the first value in unchanged form is determined.

19. Device for operating an internal combustion engine, a sensor unit (32) by means of which reference pulses (45) can be generated in synchronism with the cyclical movement of at least part of the internal combustion engine being provided, an output unit (24) by means of which at specific, fixedly predefined intervals of the cyclical movement at least one event time (t2, t3, t5, t10) for the occurrence of at least one event is calculated being provided, an independent clock pulse transmitter (25) of an output unit (24) by means of which clock pulses can be generated whose intervals are independent of the movement being provided, the intervals between the clock pulses being shorter than the intervals between the reference pulses (45), the at least one event time (t2, t3, t5, t10) being capable of being expressed as a number of clock pulses of the independent clock pulse transmitter (25) by means of the output unit (24), the at least one event being capable of being triggered by means of the output unit (24) when the number of clock pulses is reached by a pulse counter (27), **characterized in that** a ratio value which contains information about the future time sequence of the movement can be formed by means of the output unit (24) by observing the clock pulses of the independent clock pulse transmitter (25) which are counted between at least two successive reference pulses (45), and **in that** means which change the number of clock pulses on the basis of the ratio value by means of the output unit (24) are provided.

20. Device according to Claim 19, **characterized in that** a pulse counter (27) is provided in such a way that it can be initialized at each reference pulse (45), and **in that** the number of clock pulses of the independent clock pulse transmitter (25) can be recalculated up to the at least one event time (t2, t3, t5, t10) using the ratio value.

21. Device according to Claim 19, **characterized in that**, when a plurality of cylinders are present, at least one event time (t2, t3, t5, t10) can be calculated on a cylinder-specific basis by means of the output unit (24).

22. Device according to one of Claims 19 to 21, **characterized in that** the at least one event time (t2, t3, t5, t10) can be calculated from at least one setpoint value of the internal combustion engine by means of the output unit (24), a control unit (22) being provided so that the at least one setpoint value can be determined as a function of at least one operating parameter and at least one operating mode by reference to characteristic curves which are stored in the control unit (22), it being possible to transfer the at least one setpoint value from the control unit (22) to the output unit (24) via a link (28).

23. Device according to Claim 22, **characterized in that** at least one sensor (36) by means of which at least one operating parameter can be detected is provided, it being preferably possible to interrogate as operating parameters a temperature of the external air and/or a cooling water temperature and/or a temperature of the intake section and/or a position of the throttle valve and/or the presence of exhaust gas recirculation and/or a knocking signal and/or a load signal and/or a rotational speed, it being possible for the value of the at least one operating parameter to be transferred from the at least one sensor (36) to the control unit (22) via a link (38).

24. Device according to one of Claims 19 to 23, **characterized in that** at least one memory location which contains a first value or a second value for each cylinder of the internal combustion engine and for each event is provided in a memory unit (29) of the output unit (24), it being possible to interrogate the contents of the at least one memory location of the corresponding cylinder before the at least one event for the respective cylinder is triggered, and the triggering of the at least one event is influenced as a function of the contents of the at least one memory location, or the contents of the at least one memory location of the corresponding cylinder can be changed by triggering the at least one event for the respective cylinder.
